Europäisches Patentamt

European Patent Office

Office européen des brevets

(11) Publication number : **0 520 793 A1**

## (12) EUROPEAN PATENT APPLICATION

(21) Application number : **92305860.6**

(22) Date of filing : **25.06.92**

(51) Int. Cl.⁵ : **C02F 1/52,** C02F 1/66, C02F 1/04

(30) Priority : **26.06.91 JP 154706/91**

(43) Date of publication of application :
**30.12.92 Bulletin 92/53**

(84) Designated Contracting States :
**DE GB**

(71) Applicant : **KONICA CORPORATION**
26-2, Nishi-shinjuku 1-chome Shinjuku-ku
Tokyo (JP)

(72) Inventor : **Shimura, Kazuhiro, Konica
Corporation**
1, Sakura-machi
Hino-shi, Tokyo (JP)

Inventor : **Uehara, Masafumi, Konica
Corporation**
1, Sakura-machi
Hino-shi, Tokyo (JP)
Inventor : **Nogami, Akira, Konica Corporation**
1, Sakura-machi
Hino-shi, Tokyo (JP)
Inventor : **Watanabe, Shinya, Konica
Corporation**
1, Sakura-machi
Hino-shi, Tokyo (JP)
Inventor : **Funaki, Masahiro, Konica
Corporation**
1, Sakura-machi
Hino-shi, Tokyo (JP)

(74) Representative : **Ellis-Jones, Patrick George
Armine et al**
J.A. KEMP & CO. 14 South Square Gray's Inn
London WC1R 5LX (GB)

(54) **Method of treating waste solution of non-silver halide light-sensitive material.**

(57) Disclosed is a method of separating a waste solution of a non-silver halide light-sensitive material into liquid and solid comprising the steps of :

adding at least one of a neutralizer and a flocculant to the waste solution under stirring to precipitate solid,

subjecting the mixture to centrifugal filtration to separate it into filtrate and the precipitated solid, and

concentrating the filtrate by heating to further separate it into liquid and solid, by which solid and liquid can be separated sufficiently.

FIG. I

EP 0 520 793 A1

Jouve, 18, rue Saint-Denis, 75001 PARIS

## BACKGROUND OF THE INVENTION

This invention relates to a method of treating a waste solution generated by processing a non-silver halide light-sensitive material, more particularly to a method of separating said waste solution into liquid and solid by a chemical processing and heat concentration.

Steps of processing a non-silver halide light-sensitive material, for example, a light-sensitive lithographic printing plate by an automatic developer include a developing step in which a developing solution is fed to a light-sensitive layer to be processed to dissolve out an image-forming layer imagewisely, and other processing steps by washing water, a desensitizing solution, a rinsing solution and a surface-cleaning solution, if necessary. When a large quantity of light-sensitive materials are processed, there has been employed a means in which components consumed by processing are replenished, and components dissolved out in a processing solution by processing or concentrated by evaporation are removed to maintain components of a processing solution constantly. For the above replenishment, a replenishing solution is replenished to a processing solution, and for the above removal of concentrated components, a part of a processing solution or a whole processing solution when ability of the processing solution is beyond tolerance is discarded.

In processing such waste solutions, because of recent tightening of the Water Pollution Prevention Act and pollution regulations issued by urban and rural prefectures in Japan, washing water and cooling water can be discarded to drainage, but other waste solutions (e.g. waste solutions of a developing solution, a gum solution and a rinsing solution) cannot be discarded practically. For this reason, photographic processing traders concerned pay collection fees to waste solution treating traders concerned for collecting a waste solution or install treating equipments for preventing pollution. However, a means of entrusting treatment of a waste solution to waste solution treating traders concerned has problems that a considerably wide space is required for storing a waste solution, and cost is extremely high, and further, treating equipments for preventing pollution require extremely heavy initial investment and a considerably wide place for installment.

As techniques to cope with such problems, some of the present inventors have proposed a technique in which a waste solution is concentrated by heating in a evaporation vessel, liquid components evaporated are condensed by cooling, and the waste solution is thus separated into a concentrate and liquid components, whereby waste is reduced to a form of a concentrate (e.g. Japanese Provisional Patent Publication No. 304463/1989 which corresponds to U.S. Patent No. 4,961,859), and further proposed a technique aimed at reducing a viscous concentrate in an evaporation vessel, in which a waste solution is neutralized, a flocculant is added to flocculate flocculative components, flocculated components are removed by filtration, and a filtrate is fed into an evaporation vessel (Japanese Provisional Patent Publication No. 157084/1990).

However, it has been recognized that the technique disclosed in the above Japanese Provisional Patent Publication No. 157084/1990 has a problem that clogging of a filter is caused by filtering a solution after neutralization and flocculation processings, within a relatively short time, whereby exchange of filters is troublesome. On the other hand, there is also a problem that inorganic salts remain in separated liquid only by a chemical processing.

## SUMMARY OF THE INVENTION

An object of the present invention is to provide a processing method of separating a waste solution of a non-silver halide light-sensitive material into solid and liquid sufficiently, to provide a processing method low in cost, and further to provide a processing method in which operations are not troublesome for a long time.

The above object of the present invention can be accomplished by a method of separating a waste solution of a non-silver halide light-sensitive material into liquid and solid comprising the steps of:

adding at least one of a neutralizer and a flocculant to the waste solution under stirring to precipitate solid,

subjecting the mixture to centrifugal filtration to separate it into filtrate and the precipitated solid, and

concentrating the filtrate by heating to further separate it into liquid and solid.

## BRIEF DESCRIPTION OF THE DRAWING

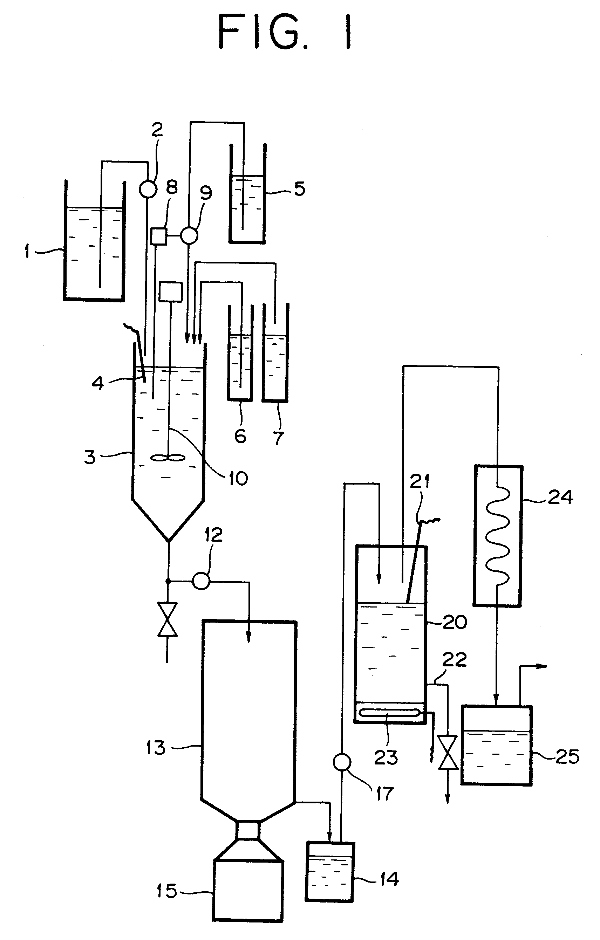

Fig. 1 is a schematic constituional view of an equipment example for practicing the method of the present invention.

## DESCRIPTION OF THE PREFERRED EMBODIMENTS

In the following, the present invention is explained in detail.

As the neutralizer to be added to a waste solution in the chemical processing step of the present invention, an acid or an alkali is used. The acid may include, for example, sulfuric acid, hydrochloric acid, phosphoric acid, oxalic acid, citric acid and tartaric acid, and the alkali may include, for example, calcium hydroxide, sodium hydroxide, potassium hydroxide, sodium carbonate and an organic amine.

When the neutralizer is added to a waste solution, the pH of the waste solution to which the neutralizer is added is preferably controlled by using a pH meter. The pH of the waste solution after the neutralizer is added is preferably in the range of 5 to 9, more preferably in the range of 6 to 8.

As the flocculant to be added to a waste solution in the chemical processing step of the present invention, there may be preferred an inorganic flocculant such as aluminum sulfate, magnesium sulfate, polyaluminum chloride, calcium chloride and magnesium chloride; and an organic flocculant such as a polyacrylamide type polymer and polyacrylic acid (salt). The amount of the flocculant to be added is preferably in the range of 0.1 to 20 % by weight based on a waste solution.

In the chemical processing step of the present invention, the neutralizer and the flocculant may be added in combination. In that case, the flocculant is preferably added simultaneously with or after addition of an acid or an alkali.

In the chemical processing step of the present invention, in addition to the neutralizer or flocculant, a filter aid is preferably added, and as the filter aid, active carbon is preferably used.

As the filter aid, there may be mentioned, in addition to active carbon, diatomaceous earth, a cellulose type aid and other mineral type aids (e.g. pearlite). As a commercially available filter aid, there may be mentioned Radiolite #100, #700 and #800 (trade names, produced by Showa Kagaku Kogyo K.K.) as a diatomaceous earth filter aid; FIBRA-CEL SW-10 and BH-40 (trade names, produced by Nippon Keisodo K.K.) as a cellulose type filter aid; and Celite Hyflo Super-Cel (trade name, produced by Nippon Keisodo K.K.), Topkoperlite #36 and #37 (trade names, produced by Nippon Keisodo K.K.) and asbestos as a filter aid of minerals other than diatomaceous earth. The amount of the filter aid to be added is preferably in the range of 0.05 to 10 % by weight based on a waste solution to which the filter aid is added. The addition time is preferably simultaneously with or before addition of the neutralizer.

In the chemical processing step of the present invention, when the neutralizer and/or the flocculant and the filter aid are added, a waste solution is so stirred that these agents are sufficiently mixed with the waste solution.

In the present invention, the waste solution chemically processed is subjected to centrifugal filtration. The centrifugal filter to be used for centrifugal filtration preferably has a longitudinally long and slender cylindrical shape. The filter medium preferably has an air flow rate of 0.5 to 300 $ml/cm^2 \cdot sec$, and a filter paper, cotton cloth, woven fabric and nonwoven facric using polyethylene fiber or polyvinyl chloride fiber may be used. The rotation number of the centrifugal filter is preferably 10 to 3,000 rpm.

In the present invention, the filtrate obtained by the chemical processing and centrifugal filtration is processed by a heat concentration step. In the processing of said heat concentration step, the filtrate obtained by the centrifugal filtration is heated in a heat concentration vessel, liquid components are evaporated and condensed to become liquid, and an evaporation residue is removed from the evaporation vessel as a concentrate or solid. The heat concentration is carried out under ordinary pressure or reduced pressure, and the concentration rate is preferably twice to 30 times, more preferably 5 to 20 times. The filtrate is concentrated to a half to one-thirtieth of its original volume. The heat concentration vessel is preferably made of a metal having a protective film such as stainless steel and a fluorine resin (Teflon, trade name), and vapor generated by the heat concentration is preferably liquified by condensation using a heat exchanger. In the present invention, as a heat concentration method, known techniques, for example, the technique disclosed in Japanese Provisional Patent Publication No. 157084/1990 may be used suitably.

In the following, an equipment example for practicing the method of the present invention is explained by referring to a drawing.

Fig. 1 is a schematic constitutional view for illustrating an example of an instrument for practicing the method of the present invention. In this figure, 1 is a waste solution tank charged with a waste solution discharged in a processing step of a non-silver halide light-sensitive material, and the waste solution in the waste solution tank 1 is delivered by a pump 2 to a chemical processing tank 3 in which a chemical processing is carried out. Here, by a liquid-level sensor 4 and a controlling mechanism not shown in the figure, the chemical processing tank 3 is constituted that operation of the pump 2 is stopped when the liquid is delivered up to a predetermined liquid level. In the chemical processing tank 3, a neutralizer is added from a neutralizer tank 5 charged with the neutralizer, a flocculant is added from a flocculant tank 6 charged with the flocculant, and active carbon is added from an active carbon tank 7 charged with the active carbon, respectively, to the waste solution in the chemical processing tank 3 in predetermined amounts. Here, operations of a liquid-delivering pump and a powder-feeding device not shown in the figure are so controlled that the flocculant and active carbon are added in amounts corresponding to the amount of the waste solution delivered by the pump 2.

When the neutralizer is added, operation of a pump 9 is so controlled by a controlling mechanism not shown in the figure based on the pH value of the waste solution measured by a pH meter 8 that the neutralizer is added until the waste solution has a predetermined pH range. Further, operation of a stirrer 10 is so controlled that the waste solution in the chemical processing tank 3 is stirred at least from the time when additions of the flocculant, neutralizer and active carbon are started to the time when the additions are completed.

After additions of the flocculant, neutralizer and active carbon are completed, a pump 12 is operated to deliver the waste solution in the chemical processing tank 3 to a centrifugal filter 13, and and the liquid is centrifugally filtered by a rotating inner tank fitted with a filter medium such as a filter cloth not shown in the figure to be separated into a filtrate and a residue. The filtrate is stored in a filtrate-storing tank 14, and a motor 15 which rotates the inner tank of the centrifugal filter 13 is designed to operate simultaneously with operation of the pump 12.

The filtrate in the filtrate-storing tank 14 is delivered to a heat concentration vessel 20 by a pump 17. Here, by a liquid-level sensor 21 and a controlling mechanism not shown in the figure, operation of the pump 17 is stopped when the liquid is delivered up to a predetermined liquid level. 22 is a means of discharging a concentrate and solid provided at the bottom of the heat concentration vessel 20, 23 is a heating device which heats the waste solution, 24 is a heat exchanger in which vapor evaporated from the waste solution in the heat concentration vessel 20 is condensed by heating, and 25 is a distilled liquid-storing tank of condensed liquid. As to the above instrument of separating solid and liquid by the evaporation method, reference can be made to Japanese Provisional Patent Publication No. 157084/1990.

In the following, the method of the present invention is explained by referring to this instrument example.

First, the waste solution tank 1 is charged with a waste solution (an overflowing solution) discharged from an instrument of processing a non-silver halide light-sensitive material. The waste solution is delivered to the chemical processing tank 3 by operating the pump 2. Here, the liquor is so delivered by using the liquid-level sensor 4 and a controlling mechanism not shown in the figure until the liquid level of the waste solution in the chemical processing tank 3 reaches a predetermined height.

After this liquid delivery is completed, from the flocculant tank 6 and the active carbon tank 7, the flocculant and active carbon are added into the chemical processing tank 3 in amounts corresponding to the amount of the liquor delivered by the pump 2. At the same time, a mechanism of controlling addition of the neutralizer is operated, the pump 8 is operated based on the detection result of the pH value of the waste solution in the chemical processing tank 3 measured by the pH meter 7, and the neutralizer is added to the waste solution from the neutralizer tank 3 until the pH value reaches a predetermined range. The stirrer 10 is rotated from the time when additions of the flocculant, active carbon and neutralizer are started and to a predetermined time after the additions are completed. After the predetermined time after all additions of the flocculant, active carbon and neutralizer are completed, the pump 12 is operated to deliver the waste solution in the chemical processing tank 3 to the centrifugal filter 13. At the same time, the inner tank of the centrifugal filter 13 is rotated, and the waste solution is centrifugally filtered. The filtrate is flown down to the filtrate-storing tank 14 and stored therein.

The filtrate in the filtrate-storing tank 14 is delivered to the heat concentration vessel 20 by operating the pump 17 until the liquid level reaches to a predetermined height based on the height of the liquid level detected by the liquid-level sensor 21. In the heat concentration vessel 20, the waste solution is heated by the heating device 23, and vapor evaporated from the surface of the waste solution is condensed by the heat exchanger 24 to become liquid. The liquid is collected in the distilled liquid-storing tank 25. On the other hand, the concentrate and solid generated by concentration are discharged from the heat concentration vessel 20 by a discharging means 22.

The waste solution to which the present invention is applied includes the following: that is, a waste solution generated by processing a light-sensitive material having a negative type light-sensitive layer using a diazo compound as a light-sensitive substance, a light-sensitive material having a positive type light-sensitive layer using an o-quinonediazide compound as a light-sensitive substance and a light-sensitive material using a photopolymer as a light-sensitive substance with the respective processing solutions, for example, a developing solution, washing water, a rinsing solution and a desensitization processing solution;

as a specific example, a waste solution of a developing solution, generated by using a light-sensitive lithographic printing plate and a developing solution in combination, as disclosed in Japanese Provisional Patent Publications No. 175757/1987, No. 24263/1987, No. 4264/1987, No. 25761/1987, No. 35351/1987, No. 73271/1987, No. 75535/1987, No. 89060/1987, No. 125357/1987, No. 133460/1987, No. 159148/1987, No. 168160/1987, No. 175758/1987, No. 238565/1987, No. 188141/1988, No. 200154/1988, No. 205658/1988 and No. 159654/1989;

for example, a waste solution of a developing solution, generated by using a light-sensitive material having a constitution in which a light-sensitive layer and a silicone layer as an ink-repellent layer are laminated on a support, and a developing solution therefor in combination, as disclosed in Japanese Provisional Patent Publications No. 149043/1989, No. 150142/1989, No. 154157/1989 and No. 154158/1989;

for example, a waste solution of a rinsing solution disclosed in Japanese Provisional Patent Publication No. 58253/1987, and a waste solution of a desensitizing solution disclosed in Japanese Provisional Patent Publication No. 58255/1987;

a waste solution generated by processing an electrophotographic lithographic printing plate having a photoconductive layer on a support, in which a toner image is formed by an electrophotographic method and a non-image portion of the photoconductive layer is removed to obtain a lithographic printing plate, for example, a waste solution generated by processing an electrophotographic lithographic printing plate as disclosed in Japanese Provisional Patent Publications No. 267954/1988 and No. 271481/1988; and

a development waste solution and a washing waste solution generated by development processings of a positive type proofing light-sensitive material containing a light-sensitive o-quinonediazide compound, a vinyl acetate type synthetic resin and a novolak type synthetic resin and a negative type proofing light-sensitive material containing a copolymer composition, a vinyl acetate type synthetic resin and a novolak type synthetic resin.

## EXAMPLES

The present invention is described in detail by referring to Examples.

## Example 1

A positive type light-sensitive lithographic printing plate ST-0117 (trade name, produced by Konica Corporation) with a size of 1,003 mm x 800 mm used as a non-silver halide light-sensitive material was processed with a developing solution having the following composition by using an automatic developer, washed with water used in cycles, and finally processed with a rinsing solution having the following composition.

Composition of developing solution

| | |
|---|---|
| A potassium silicate (trade name, produced by Nippon Kagaku Kogyo K.K.) | 2,000 g |
| Potassium hydroxide | 300 g |
| Water | 10 ℓ |

Composition of rinsing solution

| | |
|---|---|
| Sodium di(2-ethylhexyl)sulfosuccinate | 150 g |
| Sodium dihydrogen phosphate·dihydrate | 50 g |
| Citric acid·monohydrate | 10 g |
| Phosphoric acid (85 %) | 1.5 g |
| Water | 5 ℓ |

The waste solution tank 1 shown in Fig. 1 was charged with 12 ℓ of a waste solution of the developing solution with which 600 sheets of the above light-sensitive lithographic printing plates were processed, 15 ℓ of a washing waste solution and 5 ℓ of a waste solution of the rinsing solution, and processings wire carried out.

A cylindrical tank made of stainless steel having a volume of 3 ℓ was used as the chemical processing tank 3, and into the tank were added 60 ml of 10 % sulfuric acid as a neutralizer, 5 g of ash-free pulp (cellulose fiber) as a filter aid and 5 g of active carbon. When the mixture was stirred at normal temperature for 30 minutes, solid was precipitated. The pH of the liquid at this time was 3. This suspension was delivered to the centrifugal filter 13 at a flow rate of 100 ml/min, and filtered. A cylindrical centrifugal filter made of plastics having a volume of 7 ℓ was used as the centrifugal filter 13, and a filter paper having an air flow rate of 2 ml/cm²-sec was used as a filter medium. The rotation number of the centrifugal filter was made 1,000 rpm. The filtrate collected in the filtrate-storing tank 14 was delivered to the heat concentration vessel 20 by the pump 17. A cylindrical heat concentration vessel made of stainless steel having a volume of 5 ℓ was used as the heat concentration vessel 20, and a 2 kW electric heater was used in the heating device 23. By heating, about 3 ℓ of the waste solution was concentrated and solidified after 2 hours. The solid formed was non-viscous granulates, and was removed easily by the discharging means 22. The vapor generated in the heat concentration vessel 20 was flocculated in the heat exchanger 24 to become liquid, and collected in the distilled liquid-storing tank 25.

After the above procedures were repeated 10 times and 30 ℓ of the waste solution in total was processed, filtration ability of the centrifugal filter 13 was not changed at all. The solid collected in the centrifugal filter 13 was about 8 kg, and could be removed and discarded easily with the filter paper. In the heat concentration vessel 20, sludge was not attached to the inner surface of the vessel, the heating device 23 nor the liquid-level sensor 21. The liquid collected in the distilled liquid-storing tank 25 was about 28 ℓ, and no inorganic salt was melted therein.

### Example 2

A positive type light-sensitive lithographic printing plate SHP-N (trade name, produced by Konica Corporation) with a size of 1,003 mm x 800 mm and a negative type light-sensitive lithographic printing plate SWN (trade name, produced by Konica Corporation) with a size of 1,003 mm x 800 mm used as light-sensitive materials were processed with a developing solution having the following composition by using an automatic processor, washed with water used in cycles, and finally processed with a gum solution having the following composition.

Composition of developing solution

| | |
|---|---|
| N-Phenylethanolamine | 6.0 g |
| Propylene glycol | 50.0 g |
| p-t-Butylbenzoic acid | 150.0 g |
| Emulgen 147 (trade name, a nonionic surfactant, produced by Kao K.K.) | 5.0 g |
| Potassium sulfite | 300.0 g |
| Gluconic acid solution (50 % aqueous solution) | 100.0 g |
| Triethanolamine | 25.0 g |
| A potassium silicate (trade name, produced by Nippon Kagaku Kogyo K.K.) | 400.0 g |
| Potassium hydroxide | 200.0 g |
| Water | 11.5 ℓ |

Composition of gum solution

| | |
|---|---|
| Dextrin (produced by Nichiden Kagaku K.K.) | 500.0 g |
| Carboxymethyl cellulose | 25.0 g |
| 75 % Phosphoric acid | 15.0 g |
| NIKKOL OTP-100 (trade name, produced by Nikko Chemicals) | 5.0 g |
| SPAN 20 (trade name, produced by Kao K.K.) | 5.0 g |
| Water | 5.0 ℓ |

A mixture of 12 ℓ of a waste solution of the developing solution, 15 ℓ of a waste solution of washing water and 5 ℓ of a waste solution of the gum solution with which 300 sheets of the above light-sensitive lithographic printing plates, respectively, was processed by the instrument shown in Fig. 1. The procedures were carried out under the same conditions as in Example 1 except for using 70 ml of 10 % sulfuric acid as a neutralizer. The solid collected in the centrifugal filter 13 was about 8 kg, and stain due to sludge was not generated in the heat concentration vessel 20. The liquid collected in the distilled liquid-storing tank 25 was about 29 $\ell$, and no inorganic salt was dissolved therein. Filtering property of the centrifugal filtration was constantly stable, and clogging of the filter medium was not caused.

According to the present invention, in a process of separating a waste solution of a non-silver halide light-sensitive material into solid and liquid, the solid and the liquid can be separated sufficiently, cost required for the process is low, and also labor required for the process can be reduced for a long time.

## Claims

1. A method of separating a waste solution of a non-silver halide light-sensitive material into liquid and solid comprising the steps of:

   adding at least one of a neutralizer and a flocculant to the waste solution under stirring to precipitate solid,

   subjecting the mixture to centrifugal filtration to separate it into filtrate and the precipitated solid, and

   concentrating the filtrate by heating to further separate it into liquid and solid.

2. The method of Claim 1 wherein the neutralizer is an acid or an alkali.

3. The method of Claim 1 wherein the pH of the waste solution after addition of the neutralizer is 5 to 9.

4. The method of Claim 1 wherein the flocculant is an inorganic or organic flocculant.

5. The method of Claim 1 wherein the flocculant is added in an amount of 0.1 to 20 % by weight based on the waste solution.

6. The method of Claim 1 wherein the neutralizer and the flocculant are added in combination.

7. The method of Claim 1 wherein a filter aid is further added to the waste solution in an amount of 0.05 to 10 % by weight based on the waste solution.

8. The method of Claim 1 wherein the filtrate is concentrated to a half to one-thirtieth of its original volume.

# FIG. 1

EP 0 520 793 A1

European Patent Office

**EUROPEAN SEARCH REPORT**

Application Number

EP 92 30 5860

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 966 600 (CROWLEY,T.N.)<br>* column 2, line 45 - line 62 *<br>--- | 1-4 | C02F1/52<br>C02F1/66<br>C02F1/04 |
| Y,D | EP-A-0 357 170 (KONICA CORPORATION)<br>* page 10, line 20 - line 30 *<br>* page 11, line 40 - line 58 *<br>--- | 1-4 | |
| A | DE-A-3 629 203 (GÜTLING GMBH)<br>* column 1; claims *<br>--- | 1,2,4 | |
| A | US-A-4 808 316 (OTOMURA,K.)<br>* figure *<br>----- | 1,2,4,7 | |
| | | | **TECHNICAL FIELDS SEARCHED (Int. Cl.5)**<br><br>C02F |

The present search report has been drawn up for all claims

| Place of search | Date of completion of the search | Examiner |
|---|---|---|
| THE HAGUE | 02 OCTOBER 1992 | GONZALEZ ARIAS,M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

9